# EUROPÄISCHE PATENTSCHRIFT

(11) **EP 1 762 132 B1**
(45) Veröffentlichungstag und Bekanntmachung des Hinweises auf die Patenterteilung: **12.11.2008**
(21) Anmeldenummer: 06007679.1
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 14.03.2007
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- DE-A1- 19 623 391
- NL-A- 9 401 826
- US-A- 3 087 296

## Beschreibung

Die Erfindung betrifft ein Mäh- und/oder Schneidgerät mit zumindest einem front- und/oder heckseitig an einem Fahrzeug halterbaren und gegenüber diesem um eine zumindest nahezu vertikale Auslenkungsachse schwenkbaren Ausleger, der zumindest einen Arbeitskopf trägt, nach dem Oberbegriff des Anspruchs 1 (siehe z.B. NL-A-9 401 826).

Es ist bekannt, bei solchen Mäh- und/oder Schneidgeräten nicht nur den Ausleger insgesamt quer zum Fahrzeug beweglich zu halten, um ihn damit zwischen einer ausgreifenden Arbeitsstellung und einer zum Beispiel vor dem Fahrzeug eingefalteten Transportstellung oder zwischen zwei zu unterschiedlichen Seiten ausgreifenden Arbeitsstellungen verlagern oder ihn während des Ausgreifens zu einer Seite unterschiedlich weit ausschieben zu können, sondern auch, den Ausleger um eine aufragende Auslenkungsachse zu verschwenken.

Für die Querverschiebung werden als Führungshilfen zwei mit Abstand zueinander und übereinander liegende Rundrohre aus Stahl verwendet, deren oberes von einer oberen Halbschale eines Läufers des Auslegers übergriffen und deren unteres von einer unteren Halbschale des Läufers untergriffen ist.

Für das Verschwenken des Auslegers um die aufragende Achse hingegen ist die Verwendung eines horizontal liegenden Hydraulikzylinders bekannt, der mit seiner Kolbenstange an einem von der Auslenkungsachse radial ausgreifenden Hebel angreift. Der Hydraulikzylinder hat eine Erstreckung etwa in Fahrzeuglängsrichtung. Um eine Totpunktlage des Zylinders zu vermeiden, muß der Hebel, an dem die Kolbenstange angreift, immer in einem deutlichen Winkel gegenüber dieser Fahrzeuglängsrichtung stehen. Damit ist der Gesamtschwenkwinkel, der mit einem solchen Antrieb erreicht werden kann, auf deutlich unter 180° begrenzt. Zudem läuft ein solcher Antrieb mit über den Winkel stark variierendem Drehmoment.

Der Erfindung liegt das Problem zugrunde, einen Schwenkantrieb für einen Ausleger eines Geräts der genannten Art zu verbessern. ermöglichen.

Die Erfindung löst dieses Problem durch ein Mäh- und/oder Schneidgerät mit den Merkmalen des Anspruchs 1. Hinsichtlich weiterer Ausgestaltungen wird auf die abhängigen Ansprüche 2bis 17 verwiesen.

In der erfindungsgemäßen Ausbildung nach Anspruch 1 ist durch die zwei unterschiedlichen Kraftangriffsrichtungen sichergestellt, daß dann, wenn eine Krafteinleitung in die Nähe einer Totpunktlage gelangt, eine andere Krafteinleitung in einer effektiv arbeitenden Stellung mit großem Hebelarm sein kann. Dadurch entsteht zu jedem Zeitpunkt ein großes Drehmoment, der Verschwenkbereich ist deutlich vergrößert, da auch über einen Winkel von 180° hinaus geschwenkt werden kann.

Wenn die Antriebseinheit eine hydraulische Antriebseinheit ist, kann eine einfache Steuerung ohne Elektronikkomponenten Verwendung finden.

Insbesondere können für die Krafteinleitung aus unterschiedlichen Richtungen zumindest zwei auf den Ausleger einwirkbare Hydraulikzylinder vorgesehen sind, was einerseits mit einem geringen Steuerungsaufwand zu realisieren ist und andererseits günstige Angriffswinkel für die Krafteinleitungen ermöglicht.

Sehr günstig sind die Krafteinwirkungsrichtungen symmetrisch zu einer die Auslenkungsachse schneidenden Fahrzeuglängsebene angeordnet, wodurch sich für beide Schwenkrichtungen des Auslegers aus dieser Lage heraus gleiche Bedingungen ergeben.

Wenn die Antriebseinheit in einer hcckwärts weisenden Längsstellung des Auslegers unbeaufschlagt ist, ist ein Rechts- wie auch ein Linksausgreifen des Auslegers in gleicher Weise und mit gleichgroßem Bewegungswinkel bewirkbar.

Sofern der Bewegungswinkel aus dieser Stellung heraus mindestens 90° zu jeder Seite beträgt, kann der Ausleger auch querab vom Fahrzeug seitlich ausgreifen. Bei einem Winkel von bis zu 110° ist auch ein Schrägverschwenken mit einer zum Beispiel nach vorne vor das Fahrzeug weisenden Komponente möglich. Der Fahrer kann dabei den Arbeitskopf besonders gut im Blick halten.

Weiterhin ist es günstig, wenn die Schwenkbewegung um die Auslenkungsachse frei von äußeren Anschlägen ausführbar ist. Diese können dann gespart werden. Ein entsprechender Verschleiß durch Kontakt mit Anschlägen entfällt.

Eine Anordnung von Hydraulikzylindern schwenkbar an einem gegenüber dem Fahrzeug quer beweglichen Träger um parallel zur Auslenkungsachse gelegene Halterungsachsen, wobei die Halterungsachsen mit der in Draufsicht dazwischen gelegenen Auslenkungsachse ein gleichschenkliges Dreieck bilden, sichert bei jeder Auslenkung ein hohes Drehmoment und eine optimierte Symmetrie.

Insbesondere ist es dabei vorteilhaft, wenn in der heckwärts weisenden Längsstellung des Auslegers eine die Halterungsachse eines Hydraulikantriebs und die Anlenkungsachse an dem Hebel schneidende Gerade fahrzeugseitig an der Auslenkungsachsc verbeiläuft. Dadurch ist auch für jeden einzelnen Hydraulikzylinder eine Totpunktlage in jeder Stellung des Auslegers vermeidbar.

Eine besonders hinsichtlich der Ansteuerung günstige Anordnung mit einer großen Längenspreizung zwischen voll ausgefahrenem und voll eingefahrenem Antrieb ist erreicht, wenn die Hydraulikzylinder jeweils einen äußeren Zylinder umfassen, dessen Kolbenstange nach Art eines Teleskops einen inneren Zylinder mit einer ausfahrbaren und an der Anlenkungsachse an dem Hebel der Auslenkungsachse angreifenden inneren Kolbenstange ausbildet.

Bei in heckwärts weisender Längsstellung des Auslegers können sowohl die Kolbenstange des äußeren als auch die Kolbenstange des inneren Zylinders eingefahren sein, so daß die Antriebseinheit sehr kompakt und raumsparend hinter der eigentlichen Auslenkungsachse angeordnet sein kann.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit in einer quer vor dem Fahrzeug gehaltenen Transportstellung des Auslegers,
- Fig. 3: das Mäh- und/oder Schneidgerät nach Fig. 1 in Seitenansicht mit einem nach hinten zeigenden Ausleger,
- Fig. 4: eine perspektivische Einzelteildarstellung des Trägers mit zwei übereinander liegenden Führungsschienen und daran abgestützter Halterung für die Querverlagerung des Auslegers,
- Fig. 5: eine schematische Draufsicht auf die Halterung mit der Antriebseinheit in maximal nach rechts vorne ausgeschwenkter Stellung,
- Fig. 6: eine ähnliche Ansicht wie Fig. 5 mit ungefähr quer zum Fahrzeug nach rechts ausgeschwenkter Stellung, etwa entsprechend der Auslegerstellung nach Fig. 1,
- Fig. 7: eine ähnliche Ansicht wie Fig. 6 mit längs zum Fahrzeug nach hinten weisender Stellung des Auslegers, etwa entsprechend seiner Stellung in Fig. 3,
- Fig. 8: eine ähnliche Ansicht wie Fig. 7 mit gering zur linken Seite ausgeschwenktem Ausleger,
- Fig. 9: den Schaltungszustand der Antriebseinheit in Stellung nach Fig. 5,
- Fig. 10: den Schaltungszustand der Antriebseinheit in Stellung nach Fig. 6,
- Fig. 11: den Schaltungszustand der Antriebseinheit in Stellung nach Fig. 7,
- Fig. 12: den Schaltungszustand der Antriebseinheit in Stellung nach Fig. 8.

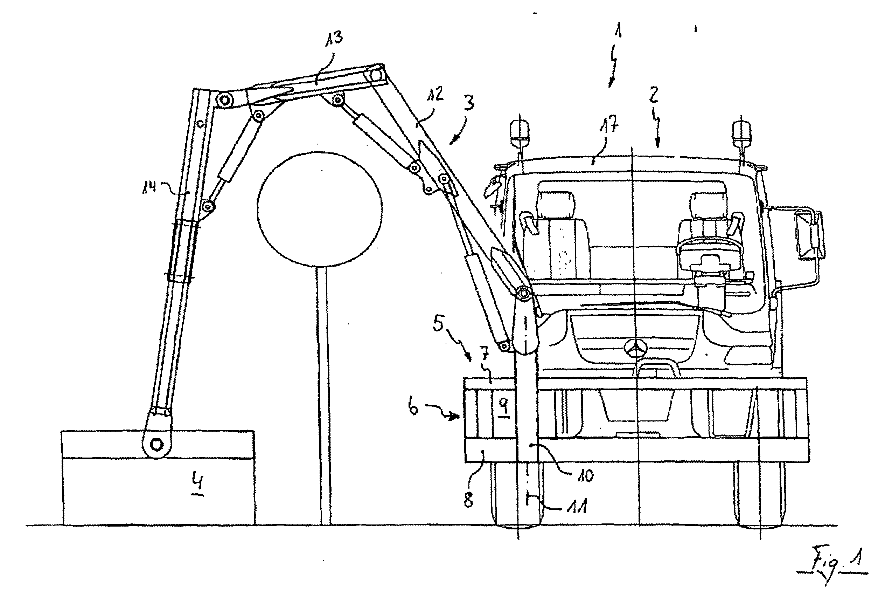

Das in Figur 1 dargestellte und insgesamt mit 1 bezeichnete Mäh- und/oder Schneidgerät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich oder alternativ auch eine Montage auf der Ladefläche oder eine Heckmontage eines Auslegers 3 in Betracht.

Der Ausleger 3 ist an einem fahrzeugfesten Träger 5 montiert, der eine Querführungseinrichtung 6 mit hier zwei beabstandet zueinander angeordneten und quer zum Fahrzeug 2 verlaufenden Führungsschienen 7, 8, hier Horizontalprofilen, und einen daran zumindest quer zum Fahrzeug 2 verschieblichen Läufer 9 umfaßt.

Der Läufer 9 trägt für den Ausleger 3 eine aufragende Halterung 10 mit einer von dieser umfaßten und hier vertikalen Schwenkachse 11, um die herum der Ausleger 3 ein- und ausschwenkbar ist und die im folgenden als Auslenkungsachse bezeichnet wird.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich. Zudem kann die Arbeitsposition des Arbeitskopfes 4 von rechts auf links variiert werden.

Der Ausleger 3 umfaßt hier beispielhaft drei Abschnitte 12, 13, 14, von denen der mittlere Abschnitt 13 der kürzeste ist, so daß auch ein Hindernis, wie in Fig. 1 dargestellt, durch eine portalartige Stellung des Auslegers 3 übergriffen werden kann. Dabei können besonders einfach die Winkelstellungen zwischen dem ersten 12 und dem zweiten Abschnitt 13 einerseits und zwischen dem zweiten 13 und dem dritten Abschnitt 14 andererseits über eine gemeinsame Ansteuerung und Beaufschlagung der beiden zugehörigen Antriebsorgane mit nur einem Bedienknopf und einer gemeinsamen Leitung einstellbar sein. Der dritte Abschnitt 14 ist hier nach Art eines Teleskops längenvariabel.

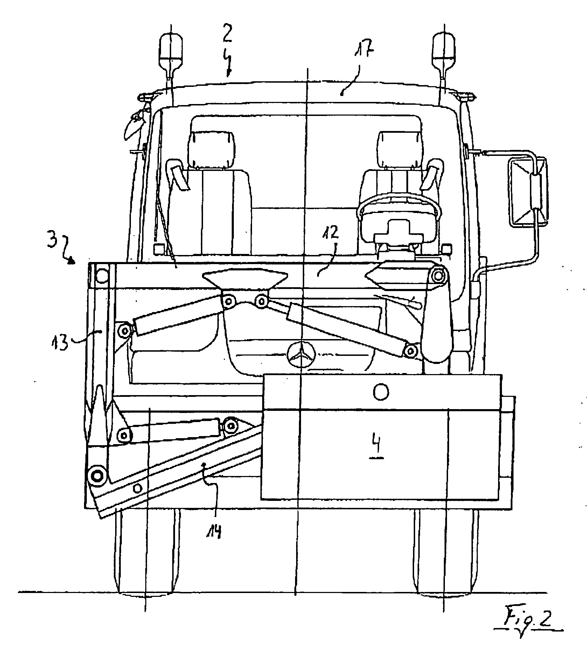

In der in Figur 2 gezeigten Quertransportstellung ist der Ausleger 3 quer vor - oder hinter (nicht dargestellt) - dem Fahrzeug 2 derart halterbar, daß der erste Abschnitt 12 als oberster Teil des Auslegers 3 etwa an der Unterkante einer Windschutzscheibe quer zum Fahrzeug 2 liegt, der zweite Abschnitt 13 zumindest nahezu vertikal abwärts weist, was aufgrund seiner geringen Länge möglich ist, und der dritte Abschnitt 14 in eingefahrener Stellung schräg aufwärts mit einer dem ersten Abschnitt entgegengesetzten Querkomponente verläuft. Das Packmaß ist daher minimiert, die Breite gering. Der Arbeitskopf 4 kann so horizontal und weit unten gehalten werden, dem Fahrer bleibt dadurch ein optimiertes Sichtfeld. Es versteht sich jedoch, daß verschiedenste Auslegertypen von dem mit einer Komponente quer zum Fahrzeug 2 verlagerbaren Läufer 9 abgestützt sein können.

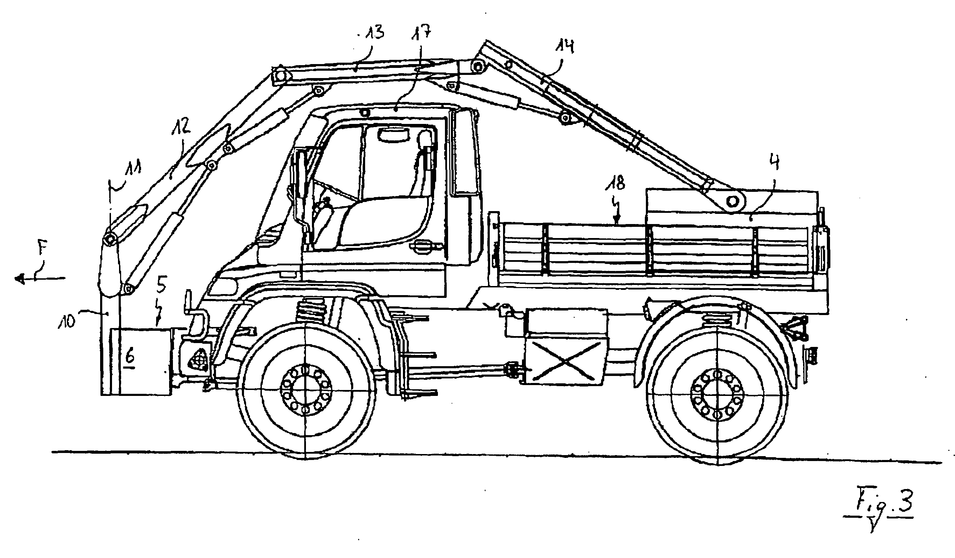

In Fig. 3 ist eine nach hinten weisende Längs- (Transport-) Stellung des Auslegers 3 dargestellt, in der von dem Ausleger 3 das Führerhaus 17 übergriffen ist und der Arbeitskopf 4 auf einer Ladefläche 18 abgelegt ist. Die nach hinten weisende Stellung kann eine statische oder dynamische Nullage darstellen, von der der Ausleger 3 zu beiden Seiten hin schwenkbar sein kann. Ebenso kann alternativ eine solche Nullage auch als rein dynamische Stellung in Fahrzeuglängsrichtung nach vorne weisend vorgesehen sein.

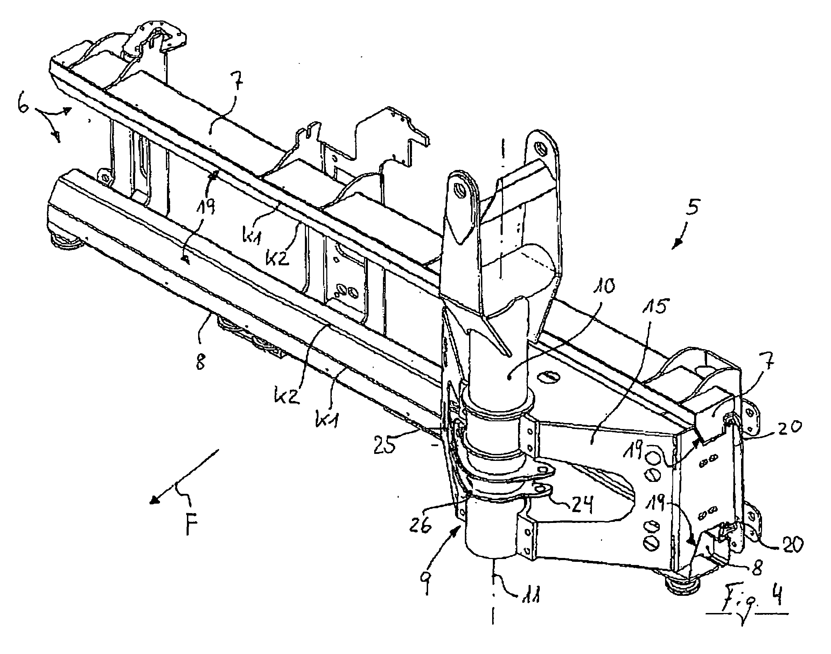

Die Führungshilfen 7, 8 der Querführungseinrichtung 6 sind hier jeweils als Kastenprofile aus einem vergüteten Stahl ausgebildet und umfassen mehrere parallel und längs zur Erstreckung der Profile 7, 8 verlaufende Kanten, unter anderem die Kanten K1, K2. Zwischen diesen Kanten K1 und K2 ist hier sowohl an dem oberen 7 wie auch an dem unteren Führungsprofil 8 jeweils eine mit einer Komponente in Fahrtrichtung F weisende Schrägfläche 19 ausgebildet, wohingegen auf der der Fahrtrichtung F entgegengerichteten Seite jeweils eine Vertikalfläche 20 ausgebildet ist (Fig. 4). Das obere und untere Führungsprofil 7, 8 sind insoweit gleichartig ausgebildet, was jedoch nicht zwingend ist. Insbesondere die vertikale Abstützungsfläche 20 erfüllt in erster Linie an dem oberen Führungsprofil 7 eine einer Zugkomponente der Gewichtskraft des Auslegers 3, sofern er in Fahrtrichtung F vor dem Träger 5 steht, entgegenwirkende Funktion.

Zwischen den Profilen 7 und 8 ist der Läufer 9 im gezeichneten Ausführungsbeispiel derart verschieblich halterbar, daß er mit einer Komponente von unten an der oberen Führungshilfe 7 und mit eine Komponente von oben an der unteren Führungshilfe 8 angreift und so an diesen abgestützt ist. Auch ein herkömmliches Übergreifen der oberen Führungsschiene 7 und Untergreifen der unteren Führungsschiene 8 ist alternativ möglich. Der Läufer 9 ist als Schlitten ausgebildet, also gleitbeweglich entlang den Führungsschienen 7, 8. Auch eine Bewegung über Rollen wäre prinzipiell möglich. Der Läufer 9 trägt die mit diesem quer zum Fahrzeug 2 bewegliche Halterung 10 des Auslegers 3, der um die von der Halterung umfaßte Auslenkungsachse 11 schwenkbeweglich ist.

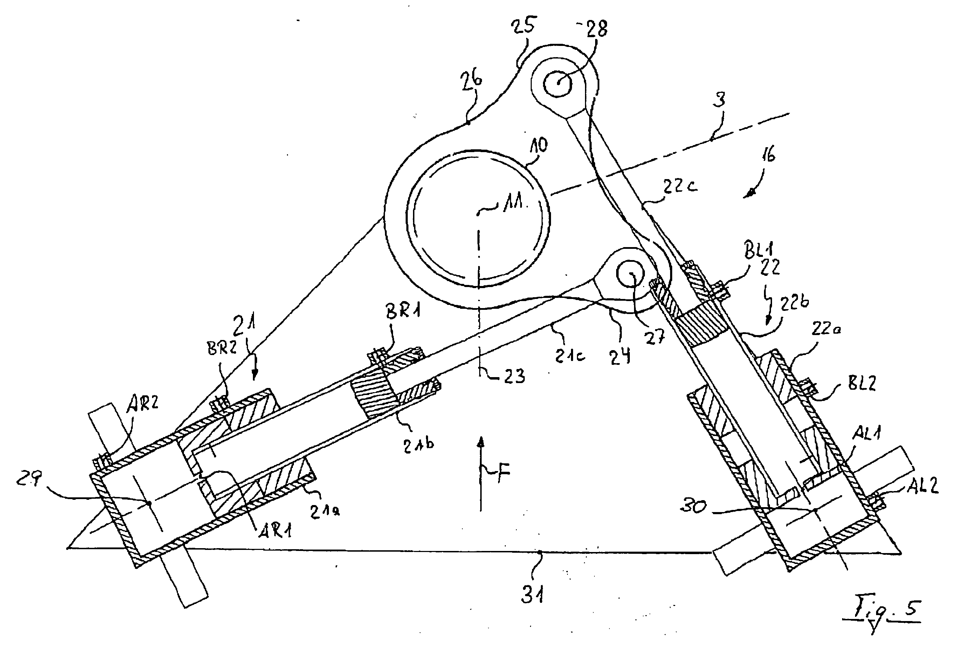

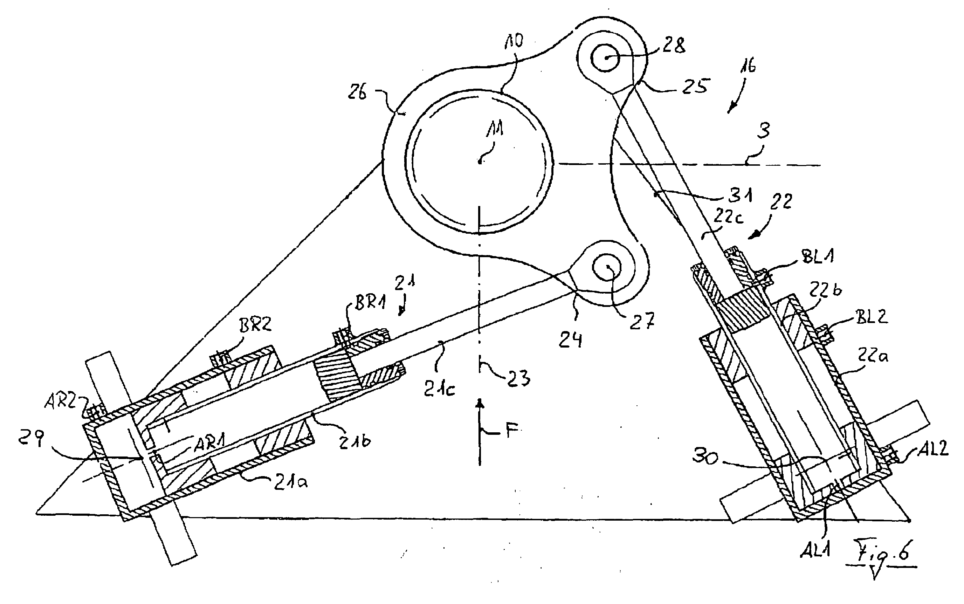

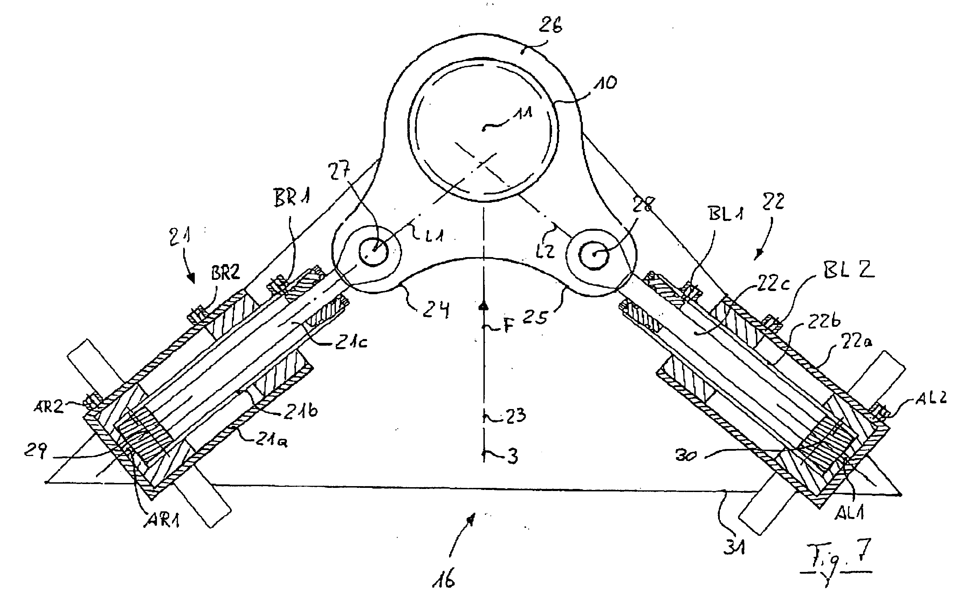

Der Läufer 9 umfaßt hierfür einen Schutzkäfig 15, in dem eine hier hydraulische Antriebseinheit 16 für das Verschwenken des Auslegers 3 um die Schwenkachse 11 der Halterung 10 geschützt gelegen sein kann (in Fig. 4 nicht eingezeichnet). Die Antriebseinheit 16 umfaßt hier zwei Hydraulikzylindereinheiten 21, 22, die im folgenden trotz ihres komplizierteren Aufbaus (s.u.) insgesamt als Hydraulikzylinder bezeichnet werden. Sie sind horizontal und damit senkrecht zur Auslenkungsachse 11 gelegen. In Nullstellung (Fig. 3, Fig. 7) sind die Hydraulikzylinder 21, 22 symmetrisch zueinander und symmetrisch zu einer die Auslenkungsachse 11 schneidenden Fahrzeuglängsebene 23 angeordnet. Die Antriebseinheit 16 ist mit dem Läufer 9 und somit zusammen mit dem Ausleger 3 quer zum Fahrzeug 2 beweglich. Ein hierfür zuständiger weiterer Zylinder kann parallel zur Führungsschiene 8 liegen und mit einer Sicherungsschaltung derart versehen sein, daß die Querverschiebung nur bei Winkelstellungen des Auslegers zwischen Fig. 5 und Fig. 6 möglich ist, um eine Kollision mit dem Führerhaus 17 zu vermeiden.

Statt der beiden Hydraulikzylinder 21, 22 könnte auch z. B. ein Gestänge mit aus zwei Richtungen einleitbaren Kräften auf die Halterung 10 wirken.

Die Hydraulikzylinder 21, 22 greifen aus verschiedenen Richtungen an Hebeln 24, 25 an, die der Halterung 10 zugeordnet sind. Im Ausführungsbeispiel sind die Hebel 24, 25 Bestandteil einer gemeinsamen Platte 26, An dieser greifen die Hydraulikzylinder 21, 22 jeweils über eine parallel zur Auslenkungsachse 11 stehende Anlenkungsachse 27, 28 mit ihren Kolbenstangen 21c, 22c an. An ihren kolbenbodenseitigen Enden sind die Zylinder 21, 22 über Halterungsachsen 29, 30, die ebenfalls parallel zur Achse 11 stehen, schwenkbeweglich an einem Träger 31 innerhalb des Schutzkäfigs 15 abgestützt. Die Verbindungslinien der Halterungsachsen 29, 30 mit der Auslenkungsachse 11 bilden ein gleichschenkliges Dreieck aus (Fig. 7). In dieser Stellung des Auslegers 3 führt eine die Halterungsachse 29 eines Hydraulikzylinders 21 und die Anlenkungsachse 27 schneidende Gerade L1 fahrzeugseitig an der Auslenkungsachse 11 vorbei. Gleiches gilt für eine die Halterungsachse 30 des Hydraulikzylinders 22 und seine Anlenkungsachse 28 schneidende Gerade L2. Dadurch stellt diese Stellung keine Totpunktlage dar. Jede Bewegung eines Hydraulikzylinders 21, 22 führt zu einem Drehmoment um die Achse 11.

Im Ausführungsbeispiel ist die Bewegungsmöglichkeit des Auslegers 3 um die Achse 11 nach rechts und links vollständig symmetrisch, um so ohne Umbau sowohl ein Bearbeiten des rechten wie auch des linken Straßenrandes zu ermöglichen. Die nach hinten weisende Stellung des Auslegers 3 bildet hierbei eine dynamische oder statische Nullstellung aus. Wie in Fig. 3 sichtbar ist, kann der Arbeitskopf 4 in dieser Stellung auf der Ladefläche 18 abgelegt sein. Es ist aber auch möglich, daß dies nur eine Durchgangsstellung ohne Ablagemöglichkeit und somit eine rein geometrische Nullstellung darstellt. Aus dieser heraus ist der Ausleger zu beiden Seiten um mindestens 90° um die Achse 11 schwenkbar. Dann befindet er sich bei Schwenken zur rechten Fahrzeugseite beispielsweise in der quer ausgreifenden Stellung nach Fig. 1 oder der Quertransportstcllung nach Fig. 2. Vorteilhaft kann der Ausleger 3 noch um mindestens 20° weiter nach vorne verschwenkt werden, gegenüber der Nullage also um mindestens 110°, wodurch er dann in die in Fig. 5 angedeutete und leicht vor das vordere Fahrzeugende greifende Stellung kommt.

Alle Schwenkstellungen sind allein durch entsprechende Beaufschlagung der Hydraulikzylinder 21, 22 zu erreichen, deren Endstellungen begrenzen den Schwenkwinkel. Somit sind sonstige äußere Anschläge zur Begrenzung des Schwenkwinkels vollständig entbehrlich.

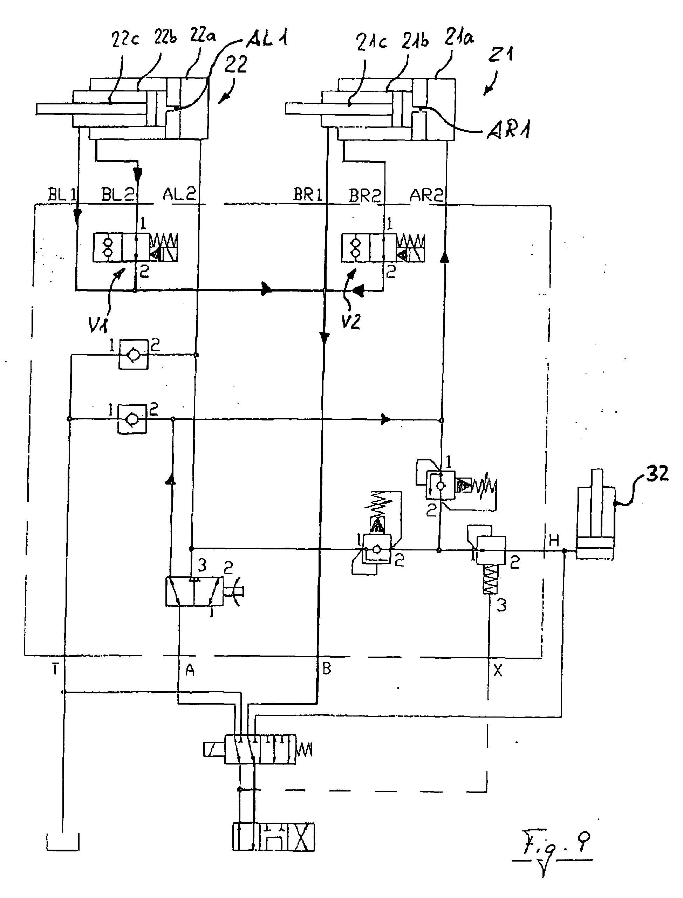

Wie in den Figuren 5 bis 8 sowie in den zugehörigen Schaltplänen nach den Figuren 9 bis 12 deutlich wird, besteht jeder Hydraulikzylinder 21, 22 aus zwei ineinander geschachtelten Zylindern; es müssen dennoch nur drei äußere Anschlüsse vorgesehen sein:

Das an den Halterungsachsen 29, 30 schwenkbeweglich am Träger 31 gehaltene äußere Kolbengehäuse 21a bzw. 22a ist kolbenbodenseitig mit einem Druckmittelanschluß AR2 bzw. AL2 versehen.

Zur kolbenstangenseitigen Druckmittelbeaufschlagung des äußeren Zylinders dient der Anschluß BR2 bzw. BL2.

Die in dem Kolbengehäuse 21a, 22a des äußeren Zylinders hubbewegliche Kolbenstange 21b bzw. 22b bildet gleichzeitig das Kolbengehäuse für eine innere Kolbenstange 21c bzw. 22c, die dann an den Anlenkachsen 27, 28 der Hebel 24, 25 der Halterung 10 angreifen kann.

Zur Druckmittelbeaufschlagung nur des inneren Zylinders dient kolbenstangenseitig der Anschluß BR1 bzw. BL1.

Zur kolbenbodenseitigen Druckmittelbeaufschlagung des inneren Zylinders dient der Durchgangskanal AR1 bzw. AL1, der den Kolbenboden des inneren Zylinders mit dem des äußeren Zylinders verbindet. Diese Verbindung ist nicht zwingend, jedoch vereinfachend. Auch ein weiterer äußerer Anschluß könnte alternativ vorgesehen sein.

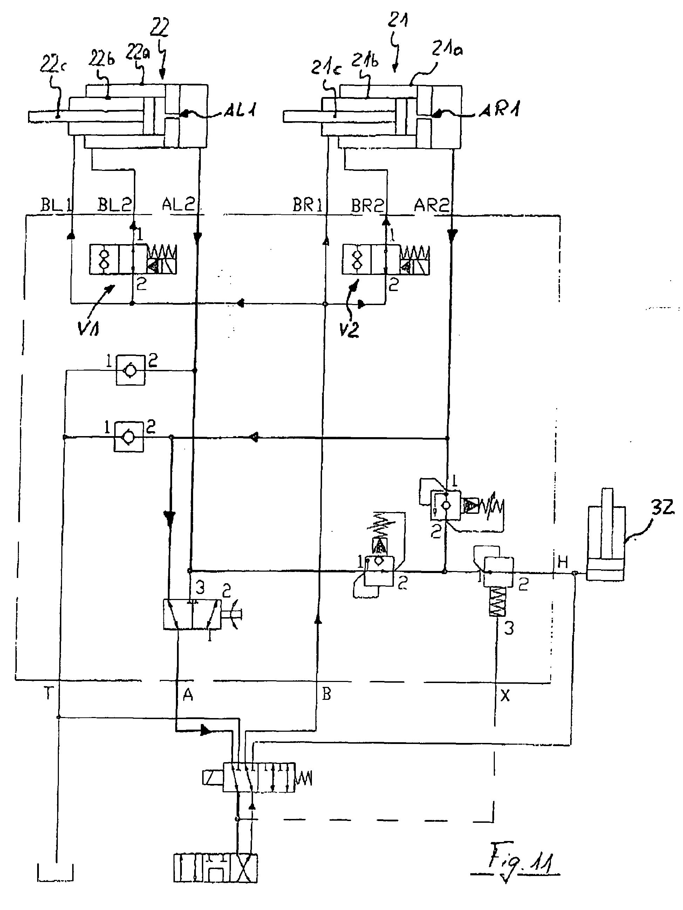

In der Nullstellung nach Fig. 7 sind die kolbenstangenseitigen Anschlüsse BR1 und BR2 des in Fahrtrichtung linken Zylinders 21 sowie die kolbenstangenseitigen Anschlüsse BL1 und BL2 des in Fahrtrichtung F rechten Zylinders 22 mit Druckmittel beaufschlagt (Fig. 11), so daß sowohl die Kolbenstangen 21c, 22c der inneren Zylinder als auch die Kolbenstangen 21b, 22b der äußeren Zylinder eingefahren sind. Die Kolbenbodenanschlüsse AR2, AL2 sind mit dem Rücklauf verbunden.

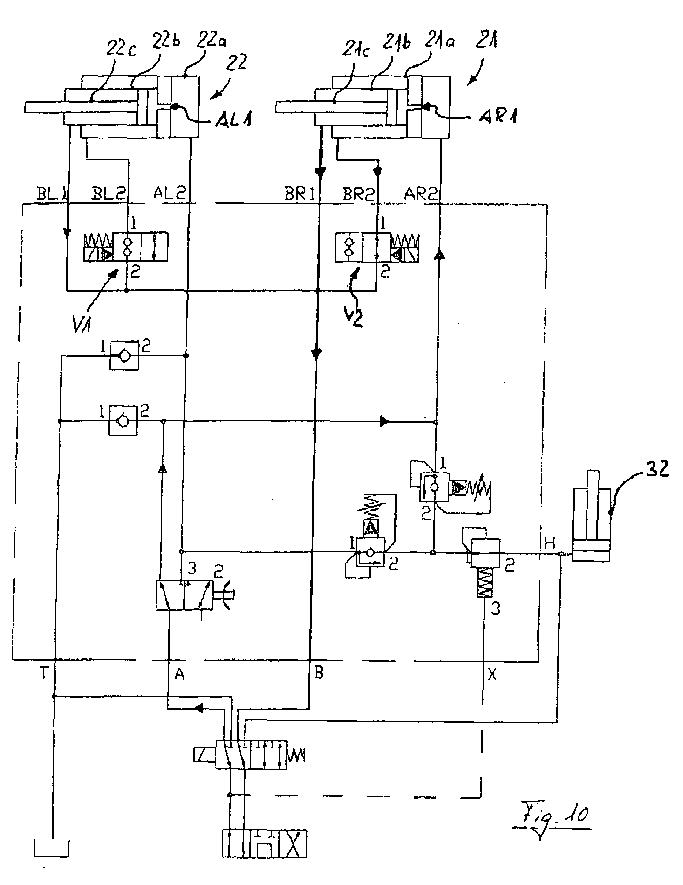

Um aus dieser Stellung heraus eine Auslenkung z. B. nach rechts zu bewirken (Übergang von Fig. 7 zu Fig. 6 bzw. von Fig. 11 zu Fig. 10), wird der linke Zylinder 21 am Anschluß AR2, also kolbenbodenseitig, mit Druckmittel beaufschlagt. Gleichzeitig gelangt auch Druckmittel durch den Kanal AR1 in den inneren

Zylinder, so daß dieser wegen des kleineren Widerstands zunächst vollständig ausfährt und anschließend der äußere Zylinder teilweise mit ausfährt. Die Anschlüsse BR1 und BR2 sind hierfür an den Rücklauf angeschlossen. Am rechten Zylinder 22 ist jedoch nur der kolbenstangenseitige Anschluß BL1 des inneren Zylinders an den Rücklauf angeschlossen, die Kolbenstange 22c dieses inneren Zylinders kann daher ausfahren, nicht jedoch die Kolbenstange 22b des äußeren Zylinders, da der Anschluß BL2 nicht freigeschaltet ist. Daher kann auch die äußere Kolbenstange 21b des linken Zylinders 21 nicht vollständig ausfahren, sondern lediglich die innere Kolbenstange 21c. Somit ergibt sich aus der Nullage heraus stets eine eindeutige Bewegungsrichtung.

Um aus dieser Stellung heraus den Ausleger 3 noch weiter nach vorne schwenken zu können und somit aus der Nullstellung heraus einen Schwenkwinkel des Auslegers von 110° oder 115° zu erreichen (Übergang von Fig. 6 zu Fig. 5 bzw. von Fig. 10 zu Fig. 9), ist es erforderlich, daß die äußere Kolbenstange 21b des linken Zylinders 21 vollständig ausfährt. Hierzu wird durch Umschalten des Ventils V1 auch der kolbenstangenseitige Anschluß BL2 des äußeren rechten Zylinders 22 mit dem Rücklauf verbunden (Fig. 9). Da ansonsten die Schaltung unverändert bleibt, kann nun die weitere Druckmittelbeaufschlagung des Anschlusses AR2 nicht mehr nur dazu führen, daß die innere Kolbenstange 21c vollständig ausfährt, sondern jetzt kann auch die äußere Kolbenstange 21b vollständig ausfahren, da der Gegendruck durch die Freischaltung des Anschlusses BL2 aufgehoben ist.

Dies stellt eine Extremstellung des linken Zylinders 21 dar, wohingegen beim rechten 22 die äußere Kolbenstange 22b nicht vollständig ausgefahren ist (Fig. 5). Die Antriebseinheit 16 ist somit selbständig in ihrer Maximalauslenkung begrenzt. Auch eine Kollision der Hydraulikzylinder 21, 22 ist daher zwangsweise vermieden. Ein Schwenken zur anderen Seite ist bei umgekehrter Beaufschlagung gleichwertig vornehmbar.

Es tritt in der gesamten Bewegung kein einziger Schwenkwinkel auf, bei dem beide Verbindungsgeraden - und damit Kraftwirklinien - zwischen Halterungsachse 29 und Anlenkungsachse 27 (bzw. 30 und 28) die Auslenkungsachse 11 schneiden würden.

Die Kraftwirklinie 29-27 des hier beim Übergang von Fig. 7 zu Fig. 5 durch Druck treibenden Zylinders 21 bleibt während dieser gesamten Bewegung fahrzeugseitig der Achse 11 und schneidet diese nicht. Ein Durchgang durch die Achse findet lediglich bei der Wirklinie des hier passiv mitgenommenen Zylinders 22 statt und ist daher unschädlich für die hohe Effektivität der Kraftübertragung.

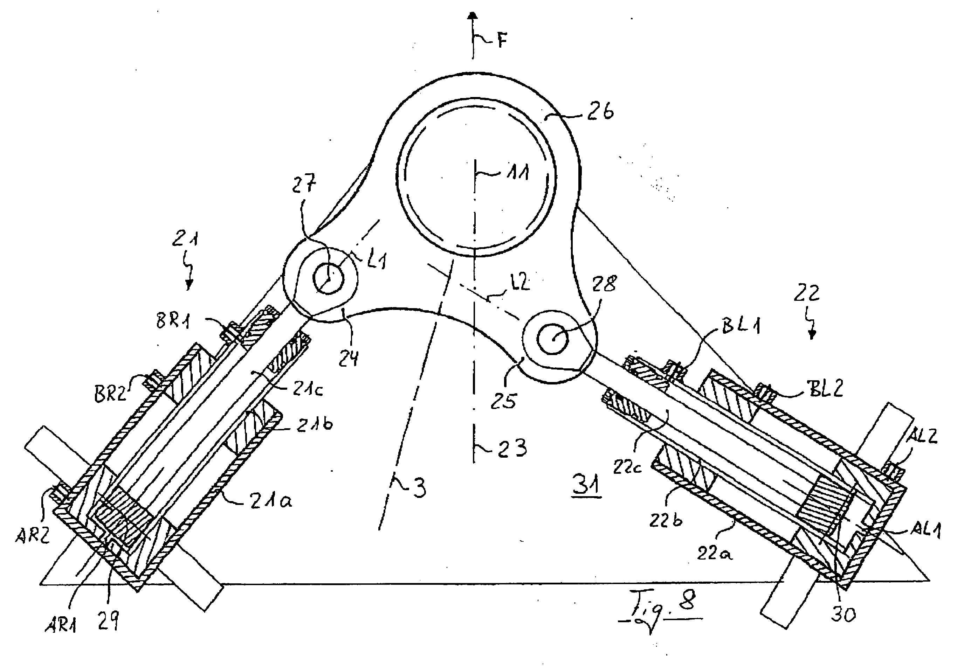

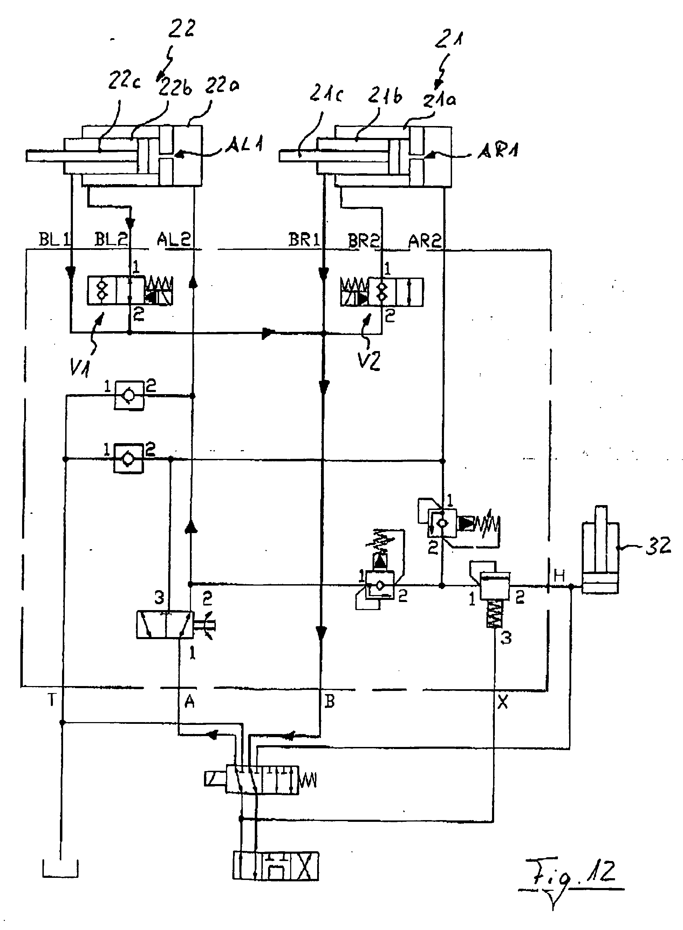

Um hingegen aus der Nullstellung gemäß Fig. 7 und Fig. 11 den Ausleger 3 gemäß Fig. 8 und Fig. 12 nach links auszulenken, sind die Verhältnisse umgekehrt wie beim Übergang von Fig. 7 zu Fig. 6: Es wird der rechte Zylinder 22 am Anschluß AL2, also kolbenbodenseitig, mit Druckmittel beaufschlagt. Gleichzeitig gelangt auch Druckmittel durch den Kanal AL1 in den inneren Zylinder, so daß dieser wegen des kleineren Widerstands zunächst ausfährt. Die Anschlüsse BL1 und BL2 sind hierfür an den Rücklauf angeschlossen. Am bezüglich der Fahrtrichtung F linken Zylinder 21 ist jedoch nur der kolbenstangenseitige Anschluß BR1 des inneren Zylinders an den Rücklauf angeschlossen, die Kolbenstange 21c dieses inneren Zylinders kann daher ausfahren, nicht jedoch die Kolbenstange 21b des äußeren Zylinders, da der Anschluß BR2 zunächst über das Ventil V2 nicht freigeschaltet ist. Daher kann auch die äußere Kolbenstange 22b des rechten Zylinders 22 nicht vollständig ausfahren, sondern lediglich die innere Kolbenstange 22c. In der Position nach Fig. 8 ist der

Ausschubweg der Hydraulikzylinder 21, 22 wegen der Geometrie der Platte 26 unterschiedlich, der linke Zylinder 21 ist noch kaum bewegt. Die Kraft wird durch den drückenden Zylinder 22 aufgebracht, der Zylinder 21 wird nur mitgezogen.

Es kann ein zusätzlicher Antrieb 32, zum Beispiel ein Hydraulikzylinder, vorgesehen sein, der ein Anheben des Auslegers 3 mit dem Arbeitskopf 4 manuell oder automatisch bei Kontakt mit einem Hindernis bewirkt, um dadurch Beschädigungen zu vermeiden.

### Bezugszeichenliste:

- 1: Mäh- und/oder Schneidgerä
- 2: Fahrzeug,
- 3: Ausleger,
- 4: Arbeitskopf,
- 5: Träger,
- 6: Querführungseinrichtung,
- 7: Führungsschiene,
- 8: Führungsschiene,
- 9: Läufer,
- 10: Halterung,
- 11: Auslenkungsachse,
- 12: erster Abschnitt,
- 13: zweiter Abschnitt,
- 14: dritter Abschnitt,
- 15: Schutzkäfig,
- 16: Antriebseinheit,
- 17: Führerhaus,
- 18: Ladefläche,
- 19: Schrägfläche,
- 20: Vertikalfläche,
- 21: Hydraulikzylinder,
- 22: Hydraulikzylinder,
- 23: Fahrzeuglängsebene,
- 24: Hebel,
- 25: Hebel,
- 26: Platte,
- 27: Anlenkungsachse,
- 28: Anlenkungsachse,
- 29: Halterungsachse,
- 30: Halterungsachse,
- 31: Träger
- 32: Zylinder
- K1, K2: Kanten,
- F: Fahrtrichtung,
- AR1, AR2,: BR1, BR2,
- AL1, AL2,:
- BL1, BL2: Anschlüsse

## Patentansprüche

1. Mäh- und/oder Schneidgerät (1) mit zumindest einem front-oder heckseitig an einem Fahrzeug (2) halterbaren und gegenüber diesem um eine zumindest nahezu vertikale Auslenkungsachse (11) schwenkbaren Ausleger (3), der zumindest einen Arbeitskopf (4) trägt,
**dadurch gekennzeichnet,**
**daß** zum Verschwenken des Auslegers (3) in einer zumindest nahezu senkrecht zur Auslenkungsachse (11) liegenden Ebene eine Antriebseinheit (16) vorgesehen ist, durch die der Ausleger (3) aus zwei oder mehr unterschiedlichen Richten-gen (29-27;30-28) mit Kraft beaufschlagbar ist.

2. Mäh- und/oder Schneidgerät nach Anspruch 1,
**dadurch gekenntzeichnet,**
**daß** die Antriebseinheit (16) eine hydraulische Antriebseinheit ist.

3. Mäh- und/oder Schneidgerät nach Anspruch 2,
**dadurch gekennzeichnet,**
**daß** für die Beaufschlagung aus unterschiedlichen Richtungen zumindest zwei auf den Ausleger (3) einwirkbare Hydraulikzylinder (21;22) vorgesehen sind.

4. Mäh- und/oder Schneidgerät nach einem der Ansprüche 1 bis 3,
**dadurch gekennzeichnet,**
**daß** die Antriebseinheit (16) zusammen mit dem Ausleger (3) quer zum Fahrzeug (2) verschieblich ist.

5. Mäh- und/oder Schneidgerät nach einem der Ansprüche 1 bis 4,
**dadurch gekennzeichnet,**
**daß** die Krafteinwirkungsrichtungen (29-27;30-28) zumindest in einer Nullstellung symmetrisch zu einer die Auslenkungsachse (11) schneidenden Fahrzeuglängsebene (23) angeordnet sind.

6. Mäh- und/oder Schneidgerät (1) nach einem der Ansprüche 1 bis 5,
**dadurch gekennzeichnet,**
**daß** die Antriebseinheit (16) in einer heckwärts weisenden Längsstellung des. Auslegers (3) unbeaufschlagt ist und aus dieser Stellung heraus zu beiden Seiten einen im wesentlichen gleichgroßen Bewegungswinkel des Auslegers (3) um die Auslenkungsachse (11) ermöglicht.

7. Mäh- und/oder Schneidgerät (1) nach Anspruch 6,
**dadurch gekennzeichnet,**
**daß** der Bewegungswinkel aus der unbeaufschlagten Stellung zu jeder Seite mindestens 90° beträgt.

8. Mäh- und/oder Schneidgerät (1) nach Anspruch 7,
**dadurch gekennzeichnet,**
**daß** der Bewegungswinkel aus der unbeaufschlagten Stellung zu jeder Seite mindestens 110° beträgt.

9. Mäh- und/oder Schneidgerät nach einem der Ansprüche 1 bis 5,
**dadurch gekennzeichnet,**
**daß** die Schwenkbewegung um die Auslenkungsachse (11) frei von äußeren Anschlägen ausführbar ist.

10. Mäh- und/oder Schneidgerät nach einem der Ansprüche 3 bis 9,
**dadurch gekennzeichnet,**
**daß** die Hydraulikzylinder (21;22) schwenkbar an einem gegenüber dem Fahrzeug quer beweglichen Träger (31) um parallel zur Auslenkungsachse (11) gelegene Halterungsachsen (29;30) abgestützt sind und diese senkrecht schneidende Verbindungsgeraden der Halterungsachsen (29;30) mit der in Draufsicht dazwischen gelegenen Auslenkungsachse (11) ein gleichschenkliges Dreieck bilden.

11. Mäh- und/oder Schneidgerät nach einem der Ansprüche 3 bis 10,
**dadurch gekennzeichnet,**
**daß** die Hydraulikzylinder (21;22) kolbenstangenseitig jeweils an einer parallel zur Auslenkungsachse (11) stehenden Anlenkungsachse (27;28) an einem Hebel (24;25) für die Bewegung des Auslegers(3) angreifen.

12. Mäh- und/oder Schneidgerät nach Anspruch 9,
**dadurch gekennzeichnet,**
**daß** in der heckwärts weisenden Längsstellung des Auslegers (3) eine die Halterungsachse (29;30) eines Hydraulikzylinders (21;22) und die Anlenkungsachse (27;28) an dem Hebel (24;25) senkrecht schneidende Gerade (L1;L2) fahrzeugseitig an der Auslenkungsachse (11) vorbeiläuft.

13. Mäh- und/oder Schneidgerät nach einem der Ansprüche 3 bis 12,
**dadurch gekennzeichnet,**
**daß** die Hydraulikzylinder (21;22) an einer quer zum Fahrzeug verschieblichen Schlitten (9) innerhalb eines von diesem gebildeten Schutzkäfigs (15) abgestützt sind.

14. Mäh- und/oder Schneidgerät mit zumindest einem front- oder heckseitig an einem Fahrzeug (2) halterbaren und gegenüber diesem um eine zumindest nahezu vertikale Auslenkungsachse (11) schwenkbaren Ausleger (3), der zumindest einen Arbeitskopf (4) trägt, nach einem der Ansprüche 1 bis 13,
**dadurch gekennzeichnet,**
**daß** zur Schwenkbewegung des Auslegers (3) zumindest ein Hydraulikzylinder (21;22) vorgesehen ist, der einen äußeren Zylinder (21a,21b;22a,22b) umfaßt, dessen Kolbenstange (21b;22b) nach Art eines Teleskops einen inneren Zylinder (21b,21c;22b,22c) mit einer ausfahrbaren inneren Kolbenstange (21c;22c) ausbildet.

15. Mäh- und/oder Schneidgerät nach Anspruch 14,
**dadurch gekennzeichnet,**
**daß** in heckwärts weisender Längsstellung des Auslegers (3) sowohl die Kolbenstange (21b;22b) des äußeren als auch die Kolbenstange (21c;22c) des inneren Zylinders eingefahren sind.

16. Mäh- und/oder Schneidgerät nach einem der Ansprüche 14 oder 15,
**dadurch gekennzeichnet,**
**daß** zum Verschwenken des Auslegers aus seiner nach hinten weisenden Längsstellung zunächst die inneren Zylinder (21b,21c;22b,22c) und nachfolgend die äußeren Zylinder 21a,21b;22a,22b) ausfahrbar sind.

17. Mäh- und/oder Schneidgerät nach einem der Ansprüche 1 bis 16,
**dadurch gekennzeichnet,**
**daß** ein weiterer Antrieb (32) zum Anheben des Auslegers (3) bei Kontakt des Arbeitskopfes (4) oder des Auslegers (3) mit einem Hindernis vorgesehen ist.

## Claims

1. A mowing and/or cutting device (1) with at least one arm (3) which is capable of being held on a vehicle (2) at the front or the rear and is pivotable with respect to the latter about a travel-out axis (11) at least substantially vertical thereto and which carries at least one operating head (4), **characteized in that** a drive unit (16), by which the arm (3) is capable of being stressed with force from two or more directions (29 - 27; 30 - 28), i.s provided in order to pivot the arm (3) in a plane situated at least substantially at a right angle to the travel-out axis (11).

2. A mowing and/or cutting device according to Claim 1, **characterized in that** the drive unit (16) is an hydraulic drive unit.

3. A mowing and/or cutting device according to Claim 2, **characterized in that** at least two hydraulic cylinders (21; 22) capable of acting upon the arm (3) are provided for the stressing from different directions.

4. A mowing and/or cutting device according to any one of Claims 1 to 3, **characterized in that** the drive unit (16) together with the arm (3) is displaceable transversely to the vehicle (2).

5. A mowing and/or cutting device according to any one of Claims 1 to 4, **characterized in that** the directions of the action of force (29 - 27; 30 - 28) are orientated at least in a zero portion in a symmetrical manner to a longitudinal plane (23) of the vehicle intersecting the travel-out axis (11).

6. A mowing and/or cutting device (1) according to any one of Claims 1 to 5, **characterized in that** the drive unit (16) is not stressed in a longitudinal position of the arm (3) facing towards the rear and it permits an angle of movement of the arm (3) of substen-tially equal magnitude about the travel-out axis (11) out of the said position towards both sides.

7. A mowing and/or cutting device (1) according to Claim 6, **characterized in that** the angle of movement out of the non-stressed position towards each side amounts to at least 90°.

8. A mowing and/or cutting device (1) according to Claim 7, **characterized in that** the angle of movement out of the non-stressed position towards each side amounts to at least 110°.

9. A mowing and/or cutting device according to any one of Claims 1 to 5, **characterized, in that** the pivoting movement about the travel-out axis (11) is capable of being carried out in a manner free from outer stops.

10. A mowing and/or cutting device according to any one of Claims 3 to 9, **characterized in that** the hydraulic cylinders (21; 22) are supported on a carrier (31) movable transversely with respect to the vehicle, so as to be pivotable about holding axes (29; 30) situated parallel to the travel-out axis (11), and connecting straight lines of the said holding axes (29; 30) which intersect the latter at a right angle form an isosceles triangle with the travel-out axis (11) interposed between them in plan view.

11. A mowing and/or cutting device according to any one of Claims 3 to 10, **characterized in that** on the side of the piston rods the hydraulic cylinders (21; 22) engage in each case on an articulation axle (27; 28) - situated parallel to the travel-out axis (11) - on a lever (24; 25) for the movement of the arm (3).

12. A mowing and/or cutting device according to Claim 9, **characterized in that,** in the longitudinal position of the arm (3) facing towards the rear, a straight line (**L1; L2**) intersecting the holding axis (29; 30) of an hydraulic cylinder (21; 22) and the articulation axle (27; 28) on the lever (24; 25) at a right angle extends past the travel-out axis (11) on the vehicle side.

13. A mowing and/or cutting device according to any one of Claims 3 to 12, **character ized in that** the hydraulic cylinders (21; 22) are supported on a slide (9) displaceable transversely to the vehicle inside a protective cage (15) formed by the said slide (9).

14. A mowing and/or cutting device with at least one arm (3) which is capable of being held on a vehicle (2) at the front or the rear and is pivotable with respect to the latter about a travel-out axis (11) at least substantially vertical thereto and which carries at least one operating head (4), according to any one of Claims 1 to 13, **characterized in that** at least one hydraulic cylinders (21; 22) is provided for the pivoting movement of the arm (3), the hydraulic cylinder (21; 22) comprising an external cylinder (21a, 21b; 22a, 22b), the piston rod (21b; 22b) of which forms an internal cylinder (21b, 21c; 22b, 22c) with an extensible internal piston rod (21c; 22c) in the manner of a telescope.

15. A mowing and/or cutting device according to Claim 14, **characterized in that** in the longitudinal position of the arm (3) facing towards the rear both the piston rod (21b; 22b) of the external cylinder and the piston rod (21c; 22c) of the internal cylinder are retracted.

16. A mowing and/or cutting device according to any one of Claims 14 or 15, **characterized in that,** in order to pivot the arm out of its longitudinal position facing towards the rear, first the internal cylinders (21b, 21c; 22b, 22c) and, after that, the external cylinders (21a, 21b; 22a, 22b) are extensible.

17. A mowing and/or cutting device according to any one of Claims 1 to 16, **characterized in that** a further drive (32) is provided for lifting the arm (3) in the event of contact of the operating head (4) or of the arm (3) with an obstacle.

## Revendications

1. Appareil de fauchage et/ou de coupe (1) avec au moins un bras en porte-à-faux (3) qui peut être fixé à l'avant ou à l'arrière d'un véhicule (2) et peut pivoter par rapport à celui-ci autour d'un axe de déviation (11) au moins à peu près vertical, lequel bras porte au moins une tête de travail (4), **caractérisé en ce que** pour le pivotement du bras en porte-à-faux (3) dans un plan situé au moins à à peu près perpendiculairement à l'axe de déviation (11), il est prévu une unité d'entraînement (16) par laquelle le bras en porte-à-faux (3) peut être sollicité à force à partir de deux directions différentes ou plus (29-27 ;30-28).

2. Appareil de fauchage et/ou de coupe selon la revendication 1, **caractérisé en ce que** l'unité d'entraînement (16) est une usité d'entraînement hydraulique.

3. Appareil de fauchage et/ou de coupe selon la revendication 2, **caractérisé en ce qu'**il est prévu au moins deux vérins hydrauliques (21 ; 22) pouvant agir sur le bras en porte-à-faux (3) pour le solliciter à partir de directions différentes.

4. Appareil de fauchage et/ou de coupe selon l'une quelconque des revendications 1 à 3, **caractérisé en ce que** l'unité d'entraînement (16) peut translater avec le bras en porte-à-faux (3) transversalement au véhicule (2).

5. Appareil de fauchage et/ou de coupe selon l'une quelconque des revendications 1 à 4, **caractérisé en ce que** les directions d'action de la force (29-27 ; 30-28) sont disposées au moins dans une position neutre symétriquement à un plan longitudinal (23) du véhicule coupant l'axe de déviation (11).

6. Appareil de fauchage et/ou de coupe (1) selon l'une quelconque des revendications 1 à 5, **caractérisé en ce que** l'unité d'entraînement (16) n'est pas sollicitée dans une position longitudinale, dirigée vers l'arrière, du bras en porte-à-faux (3), et permet, à partir de cette position, vers les deux côtés, un angle de mouvement sensiblement égal du bras en porte-à-faux (3) autour de l'axe de déviation (11).

7. Appareil de fauchage et/ou de coupe (1) selon la revendication 6, **caractérisé en ce que** l'angle de mouvement est d'au moins 90° vers chaque côté, à partir de la position non sollicitée.

8. Appareil de fauchage et/ou de coupe (1) selon la revendication 7, **caractérisé en ce que** l'angle de mouvement est d'au moins 110° vers chaque côté, à partir de la position non sollicitée.

9. Appareil de fauchage et/ou de coupe selon l'une quelconque des revendications 1 à 5, **caractérisé en ce nue** le mouvement de pivotement autour de l'axe de déviation (11) peut être exécuté sans butées extérieure.

10. Appareil de fauchage et/ou de coupe selon l'une quelconque des revendications 3 à 9, **caractérisé en ce que** les vérins hydrauliques (21 ; 22) sont soutenus pivotants sur un support (31), mobile transversalement par rapport au véhicule, autour d'axes de fixation (29 30) parallèles à l'axe de déviation (11), et des droites de liaison, coupant ces axes perpendiculairement, des axes de fixation (29 ; 30), forment un triangule isocèle avec l'axe de déviation (11) situé entre elles, vu de dessus.

11. Appareil de fauchage et/ou de coupe selon l'une quelconque des revendications 3 à 10, **caractérisé en ce que** les vérins hydrauliques (21 ; 22) agissent chacun, côté tige de piston, sur un axe d'articulation (27 ; 28), parallèle à l'axe de déviation (11), sur un levier (24 ; 25), pour le mouvement du bras en porte-à-faux (3).

12. Appareil de fauchage et/ou de coupe selon la revendication 9, **caractérisé en ce que** dans la position longitudinale du bras en porte-à-faux (3), dirigée vers l'arrière, une droite (L1 ; L2) coupant perpendiculairement l'axe de fixation (29 ; 30) d'un vérin hydraulique (21 ; 22) et l'axe d'articulation (27 ; 28) sur le levier (24 ; 25), passe, côté véhicule, à côté de l'axe de déviation (11).

13. Appareil de fauchage et/ou de coupe selon l'une quelconque des revendications 3 à 12, **caractérisé en ce que** les vérins hydrauliques (21 ; 22) sont soutenues sur un chariot (9), coulissant transversalement au véhicule, à l'intérieur d'une cage de protection (15) formée par celui-ci.

14. Appareil de fauchage et/ou de coupe avec au moins un bras en porte-à-faux (3) qui peut être fixé à l'avant ou à l'arrière d'un véhicule (2) et peut pivoter par rapport à celui-ci autour d'un axe de déviation (11) au moins à peu près vertical, lequel bras porte au moins une tête de travail (4), selon l'une quelconque des revendications 1 à 13, **caractérisé en ce que** pour le mouvement de pivotement du bras en porte-à-faux (3) il est prévu au moins un vérin hydraulique (21 ; 22) qui comprend un cylindre extérieur (21a, 21b ; 22a, 22b) dont la tige de piston (21b ; 22b) forme, à la manière d'un télescope, un cylindre intérieur (21b, 21c ; 22b, 22c) avec une tige de piston intérieure (21c ; 22c) extractible.

15. Appareil de fauchage et/ou de coupe selon la revendication 14, **caractérisé en ce que** dans la position longitudinale du bras en porte-à-faux (3) dirigée vers l'arrière, la tige de piston (21b ; 22b) du cylindre extérieur ainsi que la tige de piston (21c ; 22c) du cylindre intérieur sont rentrées.

16. Appareil de fauchage et/ou de coupe selon l'une quelconque des revendications 14 ou 15, **caractérisé en ce que** pour le pivotement du bras en porte-à-faux depuis sa position longitudinale dirigée vers l'arrière, les cylindres intérieurs (21b, 21c ; 22b, 22c) d'abord puis les cylindres extérieurs (21a, 22b ; 22a, 22b) peuvent être extraits.

17. Appareil de fauchage et/ou de coupe selon l'une quelconque des revendications 1 à 16, **caractérisé en ce qu'**il est prévu un autre dispositif d'entraînement (32) pour relever le bras en porte-à-faux (3) en cas de contact de la tête de travail (4) ou du bras en porte-à-faux (3) avec un obstacle.
